# EUROPEAN PATENT APPLICATION

(11) **EP 4 498 451 A1**
(43) Date of publication of application: **29.01.2025**
(21) Application number: 22925078.2
(22) Date of filing: 28.09.2022
(51) Int. Cl.: H01M 4/583, C01B 32/194, H01M 4/36, H01M 10/0562, H01M 10/0525, H01M 4/02

(54) **LITHIUM ION BATTERY ANODE COMPRISING HYBRID GRAPHENE**

(30) Priority: 04.02.2022 KR 20220014662
(71) Applicant: Nanogenesis Inc., Seoul 01897 (KR)
(72) Inventor: SHIM, Joon Sub, Yongin-si, Gyeonggi-do 16902 (KR)
(74) Representative: Danubia Patent & Law Office LLC
(86) International application number: PCT/KR2022/014581
(87) International publication number: WO 2023/149611

(57) **Abstract**

The present invention relates to a lithium ion battery anode comprising an anode active material composed of a graphene-microparticle composite, wherein the graphene-microparticle composite has a structure where: several layers of graphene are laminated and bent in any arbitrary direction to have a three dimensional structure; the microparticles are bound to the surface or inside of the graphene and some of metal microparticles are mutually bound and solidified; and a part of an empty space among the microparticles is filled with the graphene composite layers to result in a mutual connection between the microparticles and the graphene composite layers.

## Description

### [Technical Field]

The present invention relates to a lithium ion battery anode, and more particularly, to an anode including a graphene-based composite material (hybrid graphene) as an anode active material, and a lithium ion battery related thereto.

### [Background Art]

There are various secondary batteries that are rechargeable, such as lead-acid batteries and nickel-metal hydride batteries, but even among them, a lithium ion battery (LIB) has been not only used as batteries to supply power to portable mobile devices such as smart phones and netbooks due to their high energy density, high power density, and operating voltage that can withstand long charge and discharge, but also widely used as an energy supply member and the like to supply energy to hybrid vehicles, etc.

In the LIB, a cathode active material is variously changed to improve its performance. However, even if high energy is generated from a cathode material, when an anode material, as a space which stores the energy, is not balanced, the efficiency is inevitably decreased. In particular, only when the anode material is manufactured to be able to receive lithium ions well during charging, the charge time may be reduced. Graphite has been widely used as an anode active material for a long time. The graphite is a layered structure in which several layers of carbons bound in a regular form are laminated. During the charging process, in which lithium ions move from a cathode to an anode, the lithium ions that reach the anode are stored between the graphite layers.

Currently, research has been conducted on new materials that may replace conventional graphite anode materials to improve the performance of the lithium ion battery. The graphite has low electrical conductivity, so that the charge and discharge time is long, and the capacity for lithium ions to be bound is not sufficient, so that the charge capacity is not high.

Therefore, there is a need to develop a new anode material capable of increasing the charging capacity and battery life of the lithium ion battery, and shortening the charging time by solving or alleviating the problems to improve the characteristics of the anode material compared to the related art.

### [Disclosure]

### [Technical Problem]

The present invention has been made in an effort to solve problems of a conventional lithium ion battery including graphite as an anode active material layer that graphite has low electrical conductivity, so that it takes a long time to charge and discharge, and the capacity for lithium ions to be bound is not sufficient, so that the charging capacity is not high. To this end, an object of the present invention is to provide a lithium ion battery anode including a hybrid graphene having a graphene composite multilayer structure in which metal or semiconductor particles are fused and bound to graphene to form a three-dimensional network, and a lithium ion battery including the same.

### [Technical Solution]

In order to overcome these problems, the present invention provides a hybrid graphene structure in which metal or semiconductor particles are mutually connected with a graphene multilayer to form a network structure, thereby allowing the metal or semiconductor particles to remain in a stable state even when charging and discharging are repeated. In the related art, since a process of mixing graphene with metal or semiconductor particles is a simple mixing process with pre-generated graphene, an organic binding strength between the metal or semiconductor particles and graphene is lacking.

In the present invention, since in the process of manufacturing graphene, the graphene is manufactured by mixing metal or semiconductor microparticles, the surface of the metal or semiconductor microparticles is molten and solidified with the graphene, and the microparticles and graphene are bound to form a three-dimensional nanostructure.

In addition, since the formed graphene composite is composed of multilayer graphene, metal or semiconductor microparticles are bound to the surface or inside of the multilayer-structured graphene, and graphene composite layers are filled among silicon microparticles to have a structural characteristic of a mutual connection.

As such, there are the following effects in a structure of the anode active material composed of a graphene composite having a structure in which metal or semiconductor microparticles and multilayer graphene are mixed.

First, since the surface of the metal or semiconductor microparticles is completely coated with graphene, the volume expansion that occurs when the metal or semiconductor microparticles are bound with lithium ions is effectively suppressed. As a result, it is possible to solve a problem of metal or semiconductor particles that are broken and separated from an electrode due to excessive volume expansion and contraction.

Second, the graphene multilayer serves as a scaffold to fix the position of the metal or semiconductor. Theoretically, due to a tensile strength 200 times stronger than steel, the graphene is not easily broken even when bent or curved. Therefore, when graphene is bound with the metal or semiconductor microparticles to form a multilayer structure, the positions of the metal or semiconductor microparticles are fixed, and thus the graphene serves as a scaffold that maintains a stable structure even when the shape of the metal or semiconductor changes due to charging and discharging.

Third, the graphene has high electron mobility and current density, which facilitates electron transfer with lithium ions. As a result, the electron transfer with the metal or semiconductor microparticles is facilitated, thereby increasing the charge/discharge rate and improving the charge and discharge efficiency by the graphene metal or semiconductor composite structure.

An aspect of the present invention provides a lithium ion battery anode including an anode active material composed of a hybrid graphene composite, in which the hybrid graphene composite has a three-dimensional structure in which several layers of graphene are laminated and bent in any arbitrary direction, the metal particles are bound to the surface or inside of the graphene, some of metal microparticles are mutually bound and solidified, and a part of an empty space among the metal particles is filled with the graphene composite layers to have a mutual connection structure.

In addition, the present invention provides the lithium ion battery anode characterized in that the graphene is coated on the surface of the metal microparticles.

In addition, the present invention provides the lithium ion battery anode characterized in that the graphene-metal composite is produced by a photochemical, photothermal irradiation or thermal treatment process.

In addition, the present invention provides the lithium ion battery anode characterized in that the metal or semiconductor particles are composed of a metal or semiconductor selected from the group consisting of silver (Ag), silicon (Si), silicon carbide (SiCx including Si₂C, SiC or SiC₂), silicon oxide (SiOx including SiO or SiO₂), silicon composite oxide (Si-MgₓSiOₓ), magnesium metasilicate (enstatite, MgSiO₃), forsterite (Mg₂SiO₄), gold (Au), platinum (Pt), palladium (Pd), aluminum (Al), zinc (Zn), silver alloy (Ag alloy), copper (Cu) having a surface coated with silver (Ag), and silver (Ag) having a surface coated with copper (Cu).

In addition, the present invention provides the lithium ion battery anode characterized in that the hybrid graphene composite has a network structure formed by mutually connecting the three-dimensional porous graphene structure and the metal particles.

Another aspect of the present invention provides an all-solid-state battery including a cathode including a cathode current collector and a cathode active material layer; a solid electrolyte layer; and an anode.

In addition, the present invention provides the all-solid-state battery characterized in that the cathode active material layer includes at least one cathode active material selected from the group consisting of lithium-nickel-cobalt-manganese composite oxide (NCM), lithium-nickel-cobalt-aluminum composite oxide (NCA), lithium-cobalt composite oxide (LCO), and lithium-nickel composite oxide (LNO).

In addition, the present invention provides the all-solid-state battery characterized in that the solid electrolyte layer includes at least one solid electrolyte selected from the group consisting of Li2S-P2S5-LiI, Li2S-P2S5-LiCl, Li2S-P2S5-LiBr, Li2S-P2S5-Li2O, Li2S-P2S5-Li2O-LiI, Li2S-SiS2, Li2S-SiS2-LiI, Li2S-SiS2-LiBr, Li2S-SiS2-LiCl, Li2S-SiS2-B2S3-LiI, Li2S-SiS2-P2S5-LiI, Li2S-B2S3, Li2S-GeS2 and Li2S-SiS2-Li3PO4.

### [Advantageous Effects]

According to the present invention, the lithium ion battery anode includes a three-dimensional porous hybrid graphene composite manufactured by a photochemical, photothermal irradiation or thermal treatment process as an anode active material to form a stable graphene composite structure, significantly improve the charge/discharge rate and efficiency with high electrical conductivity, and maximize a capacity capable of being bound with lithium ions, thereby implementing a lithium ion battery with both performance and stability.

### [Description of Drawings]

FIG. 1A is a scanning electron microscope (SEM) photograph and a schematic diagram showing silver particles (Ag) before performing a photothermal irradiation process.
FIG. 1B is a scanning electron microscope (SEM) photograph showing silver particles (Ag) after performing the photothermal irradiation process.
FIG. 1C is a scanning electron microscope (SEM) photograph showing a porous graphene structure (three-dimensional nanoporous graphene) manufactured by photochemical, photothermal irradiation or thermal treatment without metal particles.
FIG. 1D is a scanning electron microscope (SEM) photograph showing a hybrid graphene composite for an all-solid-state battery anode active material manufactured by photochemical, photothermal irradiation or thermal treatment in an exemplary embodiment of the present invention.
FIG. 1E is a schematic diagram showing a structure in which graphene manufactured by photochemical, photothermal irradiation, or thermal treatment reaction of FIG. 1D is located and fixed in an empty space b of silver (Ag) microparticles in an exemplary embodiment of the present invention.
FIG. 2 is a graph showing results of current measurement according to a concentration of an electrochemical measuring material (PAP) with respect to each of a hybrid graphene complex electrode (graphene-Ag electrode) for an anode active material of an all-solid-state battery according to the present invention, a graphene electrode, and a metal electrode (gold electrode).
FIG. 3 is a graph showing comparison of current values at the same concentration (10⁻³ mM) of PAP with respect to each of a hybrid graphene composite (hybrid graphene) for an anode active material of an all-solid-state battery according to the present invention, graphene and metal (metal (Au)).
FIG. 4 is a real-time graph showing various concentrations of an electrochemical measuring material (PAP) measured using a hybrid graphene electrode for an all-solid-state battery anode according to the present invention.
FIG. 5 is an example of an all-solid-state battery including an all-solid-state battery anode according to the present invention, and is a cross-sectional schematic diagram of an all-solid-state battery including a cathode including a cathode active material (NMC), a sulfide-based solid electrolyte layer, and an anode including an anode current collector (SUS) and an anode active material layer including an anode active material composed of the hybrid graphene composite.
FIG. 6 is a photograph showing cross sections in charging (a) and discharging (b) states of an all-solid-state battery anode including a hybrid graphene composite of the present invention.
FIG. 7 is a photograph for a hybrid graphene anode (left) manufactured according to the present invention and a coin cell battery (right) manufactured using the same.

### [Best Mode]

In describing the present invention, the detailed description of known related functions or constitutions will be omitted if it is determined that it unnecessarily makes the gist of the present invention unclear.

Exemplary embodiments according to a concept of the present invention may have various modifications and various forms and specific exemplary embodiments will be illustrated in the drawings and described in detail in the present specification or application. However, this does not limit the exemplary embodiment according to the concept of the present invention to specific exemplary embodiments, and it should be understood that the present invention covers all the modifications, equivalents and replacements included within the idea and technical scope of the present invention.

Terms used in the present specification are used only to describe specific exemplary embodiments, and are not intended to limit the present invention. The singular expression includes the plural expression unless the context clearly dictates otherwise. In the present specification, it should be understood that term "including" or "having" indicates that a feature, a number, a step, an operation, a component, a part or the combination thereof described in the specification is present, but does not exclude a possibility of presence or addition of one or more other features, numbers, steps, operations, components, parts or combinations, in advance.

Hereinafter, the present invention will be described in detail.

The present invention relates to an all-solid-state battery anode for a lithium ion battery, and is characterized in that a hybrid graphene composite, which is a composite material of graphene and metal particles, is composed of an anode active material.

The hybrid graphene composite is an anode material constituting an anode active material layer, and consists of a lithium ion battery to serve to absorb lithium (Li) during charging, and then serve as a protective layer of a metal lithium layer by coating the metal lithium layer that is deposited at the interface between the anode current collector and the anode active material layer after the charge capacity is exceeded. Simultaneously, the hybrid graphene composite suppresses excessive growth of lithium dendrites to block penetration into the solid electrolyte layer and induce uniform growth of lithium dendrites, thereby preventing short circuit and capacity reduction of the all-solid-state battery, and as a result, improving the performance of the all-solid-state battery.

At this time, since the graphene constituting the hybrid graphene composite has high electron mobility, so that electron supply is uniform and smooth, the graphene serves to increase the charging/discharging rate and efficiency of the all-solid-state battery. In addition, the graphene has a high Young's modulus to efficiently support an expansion phenomenon of the anode active material due to the binding of lithium (Li) and metal particles such as silver (Ag) particles.

Meanwhile, it is preferable that the graphene constituting the hybrid graphene composite is derived from a three-dimensional porous graphene structure rather than pure graphene without defects.

The hybrid graphene composite has a three-dimensional structure in which several layers of graphene are laminated and bent in an arbitrary direction, the metal particles are bound to the surface or inside of the graphene by photochemical, photothermal irradiation or thermal treatment, some of the metal microparticles are mutually bound and solidified, and a part of an empty space among the metal particles is filled with the graphene composite layers to have a mutual connection structure.

In addition, the hybrid graphene composite may also have a structure in which the graphene is coated on the surface of the metal microparticles.

Pure graphene without defects has excellent physical properties such as high electrical conductivity and high surface area by itself, but an advantage of high surface area is greatly reduced due to irreversible self-aggregation.

On the other hand, a three-dimensional porous graphene structure in which pores are organically connected three-dimensionally between single-layer and/or multi-layer graphene sheets has a relatively larger specific surface area due to reduced self-aggregation, and more rapidly diffuses electrons and ions to exhibit relatively superior properties in electrochemical applications such as energy conversion and storage devices. In addition, the three-dimensional porous graphene structure has an advantage of being able to control pore characteristics (such as location and size of pores) by controlling process variables during the manufacturing process.

Furthermore, the three-dimensional porous graphene structure may also control the electrical characteristics by changing the electronic structure of the graphene through chemical doping that adsorbs heterogeneous materials such as metal particles and the like, such as the graphene-metal particle composite according to the present invention.

Meanwhile, the method for manufacturing the three-dimensional porous graphene structure is not particularly limited, but a method of using a hard template or a soft template is mainly used. Methods using the hard template include a method using spherical polymers, a method using metal oxide particles, a method using porous substrates such as nickel foam, and the like, and the soft template method may synthesize materials with controlled pore sizes by using a micellar template formed by selfassembling surfactant molecules, and has an advantage of being relatively easy to remove the template compared to the hard template method.

In addition, the three-dimensional porous graphene structure may also be manufactured by forming a polymer coating layer, and then inducing a stabilization reaction so that the carbon atoms in the polymer have a hexagonal ring arrangement, and carbonizing the polymer at a high temperature. At this time, specific examples of the polymer may include poly(methyl methacrylate) (PMMA), polystyrene (PS), polyimide (PI), polyetherimide (PEI), Kapton Film, etc., but are not necessarily limited thereto, and there are no special restrictions on the structure, molecular weight, glass transition temperature, etc., of any polymer that may serve as a carbon source that forms graphene by carbonizing the polymer at a high temperature.

The metal particles that are complexed with the graphene to form a hybrid graphene composite may be microparticles made of a metal or semiconductor selected from the group consisting of silver (Ag), silicon (Si), silicon carbide (SiCx including Si₂C, SiC or SiC₂), silicon oxide (SiOx including SiO or SiO₂), silicon composite oxide (Si-MgₓSiOₓ), magnesium metasilicate (enstatite, MgSiO₃), forsterite (Mg₂SiO₄), gold (Au), platinum (Pt), palladium (Pd), aluminum (Al), zinc (Zn), silver alloy (Ag alloy), copper (Cu) having a surface coated with silver (Ag), and silver (Ag) having a surface coated with copper (Cu). Furthermore, the microparticles may also be metal or semiconductor particles (e.g., silver-coated copper particles, copper-coated silver particles, oxide-coated silicon particles, composite oxide-coated silicon particles, etc.) including a core particle made of one of metal or semiconductor materials and a coating layer made of a different material from the core particle, but are not necessarily limited to the metal particles described above.

As an example of the metal particles, silver (Ag) particles are dissolved in lithium (Li) and lower the energy required for lithium to crystallize to allow lithium to grow more uniformly rather than ununiformly grow by generating pores, thereby ultimately contributing to improved performance of a lithium ion battery.

As a method for manufacturing the hybrid graphene composite by complexing the graphene and the metal particles, a method of uniformly mixing and complexing a three-dimensional porous graphene structure and metal particles through a stirring process such as ball milling is also possible. More preferably, a hybrid graphene composite having a three-dimensional network structure in which a mutual connection between metal particles, a mutual connection between graphene sheets, and a mutual connection between metal particles and graphene sheets are organically formed may be manufactured by irradiating light on a mixture in which a three-dimensional porous graphene structure and metal particles are uniformly mixed and sintering the mixture.

The hybrid graphene composite may also be applied to a lithium ion battery of all-solid-state batteries containing a solid electrolyte layer, and the all-solid-state battery including an anode active material composed of the hybrid graphene composite may be formed by including a cathode including a cathode current collector and a cathode active material layer, a solid electrolyte layer, and an anode including an anode current collector and an anode active material layer including an anode active material composed of the hybrid graphene composite.

At this time, the cathode active material layer may include at least one cathode active material selected from the group consisting of lithium-nickel-cobalt-manganese composite oxide (NCM), lithium-nickel-cobalt-aluminum composite oxide (NCA), lithium-cobalt composite oxide (LCO), and lithium-nickel composite oxide (LNO), but the component material is not necessarily limited to the cathode active material.

In addition, the type of solid electrolyte constituting the solid electrolyte layer is not particularly limited, but may include a sulfide-based solid electrolyte, and may be, for example, at least one selected from the group consisting of Li2S-P2S5-LiI, Li2S-P2S5-LiCl, Li2S-P2S5-LiBr, Li2S-P2S5-Li2O, Li2S-P2S5-Li2O-LiI, Li2S-SiS2, Li2S-SiS2-LiI, Li2S-SiS2-LiBr, Li2S-SiS2-LiCl, Li2S-SiS2-B2S3-LiI, Li2S-SiS2-P2S5-LiI, Li2S-B2S3, Li2S-GeS2 and Li2S-SiS2-Li3PO4.

Hereinafter, the present invention will be described in more detail through Exemplary Embodiments.

Exemplary Embodiments according to the present specification may be modified in various different forms, and it is not interpreted that the scope of the present specification is limited to the Exemplary Embodiments described in detail below.

Exemplary Embodiments of the present invention will be provided for more completely explaining the present specification to those skilled in the art.

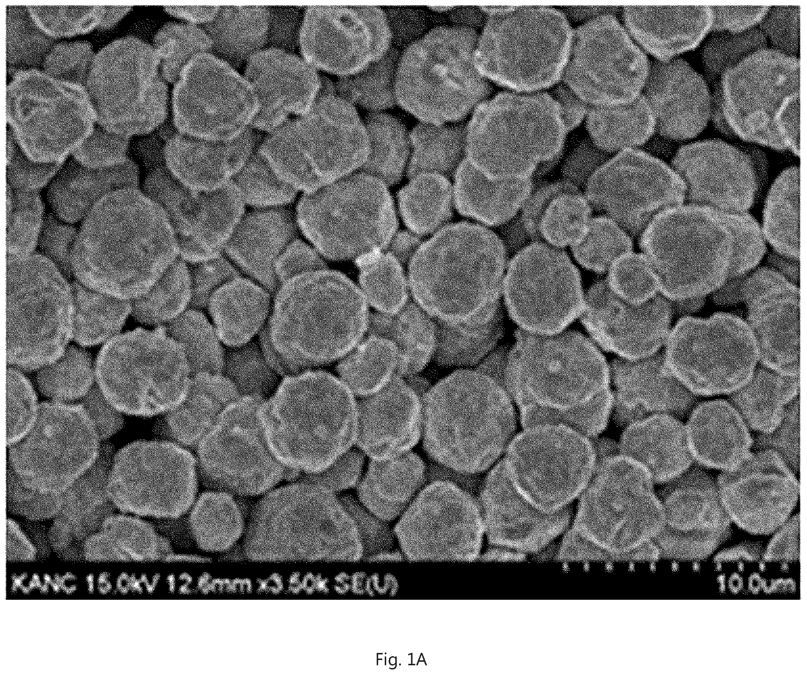

FIG. 1A is a scanning electron microscope (SEM) photograph showing silver particles (Ag) before performing a photothermal irradiation process for manufacturing a hybrid graphene composite, which is an anode active material included in a solid-state battery anode according to the present invention.

Referring to FIG. 1A, silver (Ag) particles before photothermal irradiation have a spherical shape and a particle diameter of about 5 µm.

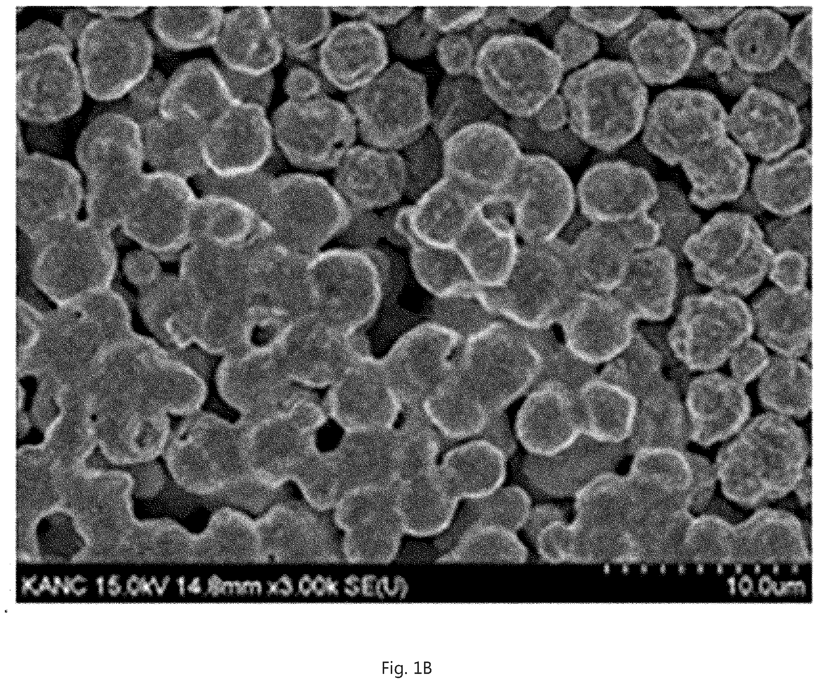

FIG. 1B is a scanning electron microscope (SEM) photograph showing silver particles (Ag) after performing the photothermal irradiation process.

Referring to FIG. 1B, it is confirmed that while the surface of silver (Ag) particles is molten using the photothermal irradiation, the particles are bound and solidified with adjacent particles, and it can be seen that some particles are not connected to form an empty space.

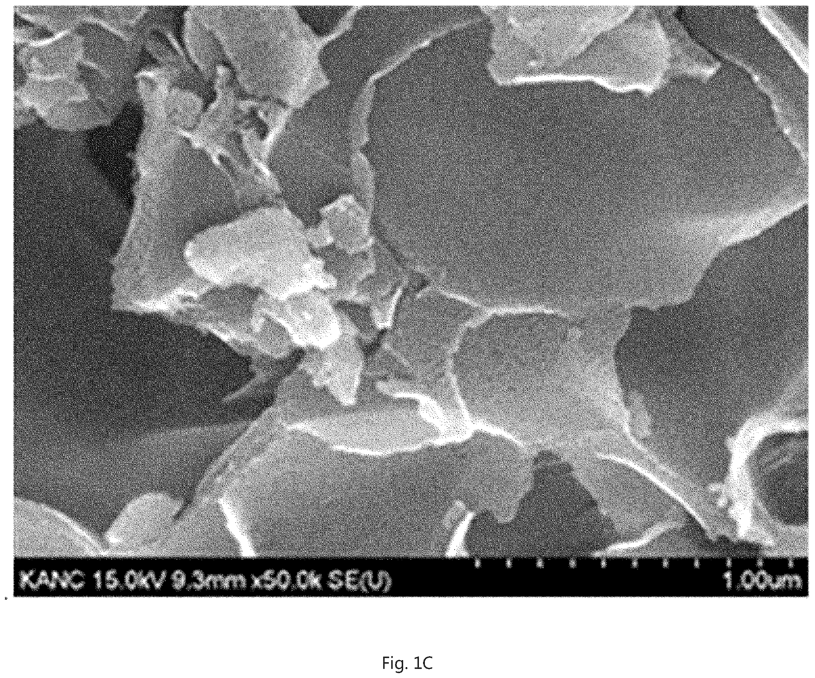

FIG. 1C is a scanning electron microscope (SEM) photograph showing a porous graphene structure (three-dimensional nanoporous graphene) before performing a photothermal irradiation process for manufacturing a hybrid graphene composite, which is an anode active material included in a lithium ion battery anode according to the present invention.

Referring to FIG. 1C, it can be confirmed that the multilayer graphene has a structure that is overlapped or bent in a three-dimensional structure.

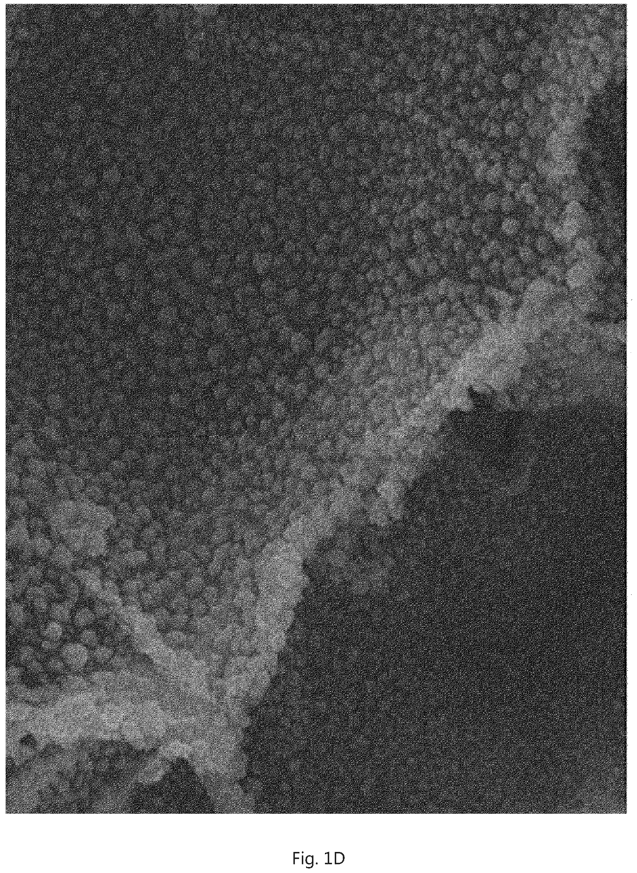

FIG. 1D is a scanning electron microscope (SEM) photograph showing a hybrid graphene composite for an all-solid-state battery anode active material according to the present invention manufactured by performing a photothermal irradiation process to a mixture of a three-dimensional porous graphene structure and silver particles (Ag) in an exemplary embodiment of the present invention.

Referring to FIG. 1D, in the exemplary embodiment of the present invention, the hybrid graphene composite has a fixed structure in which metal microparticles are simultaneously bound to the surface and inside of the graphene composite layers by photochemical, photothermal irradiation or thermal treatment, and simultaneously, the metal microparticles may be mutually bound and solidified.

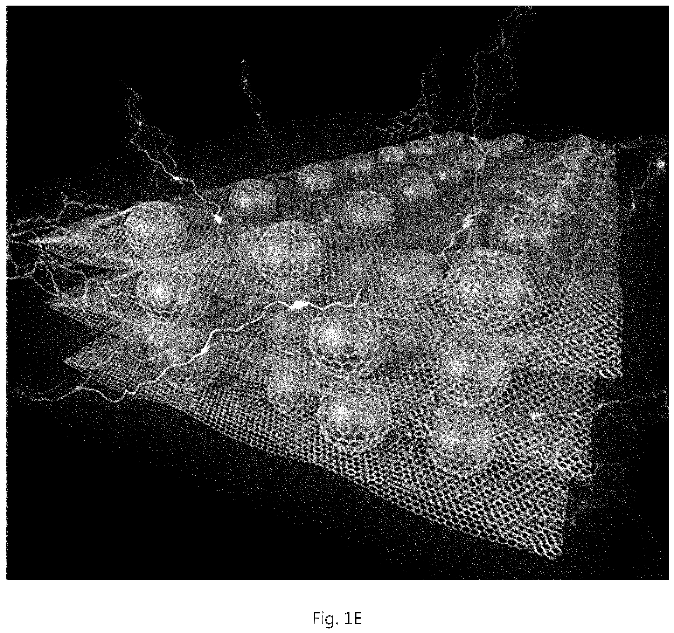

FIG. 1E is a schematic diagram showing a structure in which graphene manufactured by photochemical, photothermal irradiation, or thermal treatment of FIG. 1D is located and fixed in an empty space of silver (Ag) microparticles in an exemplary embodiment of the present invention.

FIG. 1E is a schematic diagram showing a structure in which graphene manufactured by photochemical, photothermal irradiation or thermal treatment is located and fixed in an empty space of silver (Ag) microparticles. The silver (Ag) microparticles may be bound to the inside and outside of the graphene composite layers, and although not shown in the schematic diagram, some metal microparticles may be mutually bound and solidified depending on irregular positions of the silver (Ag) microparticles.

In addition, the silver (Ag) metal microparticles may be coated with graphene on the surface through photochemical, photothermal irradiation, or thermal treatment. In FIG. 1E, a graphene coating structure is shown as a network on the surface of the particles.

Conventional graphene requires complex processes, including a hightemperature process, but synthetic graphene may be synthesized relatively simply through a one-step process through the photochemical, photothermal irradiation, or thermal treatment.

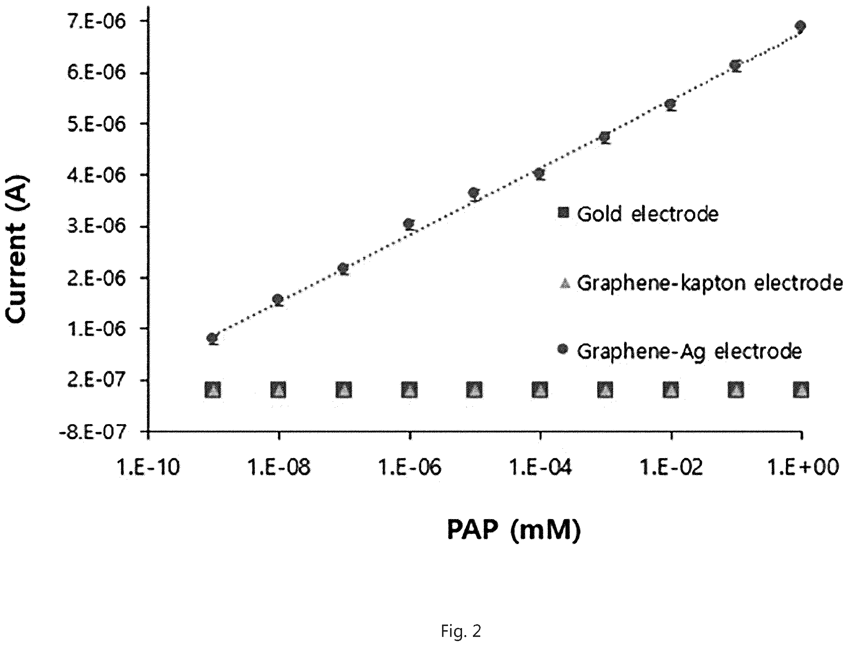

FIG. 2 is a graph showing results of current measurement according to a concentration of an electrochemical measuring material (p-Aminophenol, PAP) with respect to each of a hybrid graphene complex electrode (graphene-Ag electrode) for an anode active material of an all-solid-state battery according to the present invention, a graphene electrode, and a metal electrode (gold electrode).

For each electrode, the size of a current signal gradually increases depending on a PAP concentration.

In addition, it can be seen that with respect to the same concentration of PAP, a signal of the graphene electrode, which has the advantages of surface area and electron inflow and outflow, is larger than the metal electrode, and a signal of the hybrid graphene composite electrode, which has lower resistance than the graphene electrode, is measured to be larger.

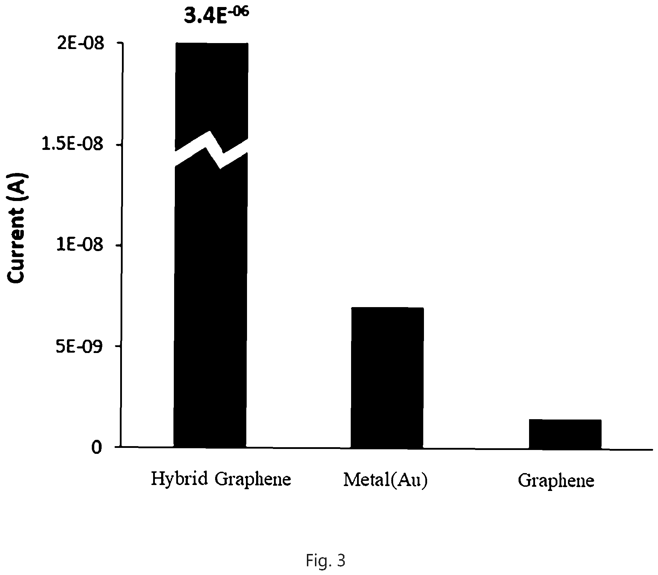

FIG. 3 is a graph showing comparison of current values at the same concentration (10⁻³ mM) of PAP with respect to each of a hybrid graphene composite (hybrid graphene) for an anode active material of an all-solid-state battery according to the present invention, graphene and metal (metal (Au)).

Referring to FIG. 3, a graph shows a difference in current signals measured for the same concentration of PAP with respect to a hybrid graphene electrode (graphene metal composite), a metal electrode and a graphene electrode for an all-solid-state battery anode active material. It can be seen that the size of the signal measured by the graphene metal composite electrode at the same concentration is much larger than that of comparative electrodes. Therefore, it can be seen that the current signal of the graphene metal composite electrode of the present invention generates a larger signal than that of the comparative electrodes, and thus a signal to noise ratio (SNR) is greater than that of the comparative electrodes.

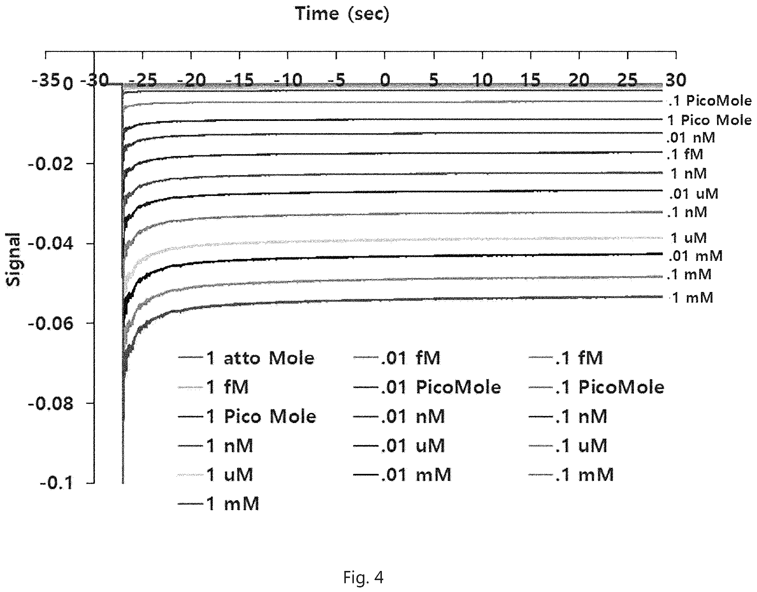

FIG. 4 is a real-time graph showing various concentrations of an electrochemical measuring material (PAP) measured using a hybrid graphene electrode for an all-solid-state battery anode according to the present invention.

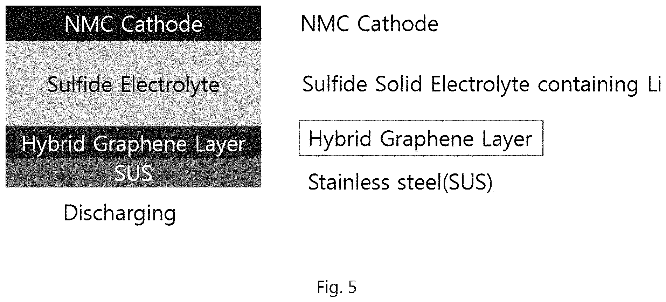

FIG. 5 is an example of an all-solid-state battery including an all-solid-state battery anode according to the present invention, and is a cross-sectional schematic diagram of an all-solid-state battery including a cathode including a cathode active material (NMC), a sulfide-based solid electrolyte layer, and an anode including an anode active material layer including an anode current collector (SUS) and an anode active material composed of the hybrid graphene composite.

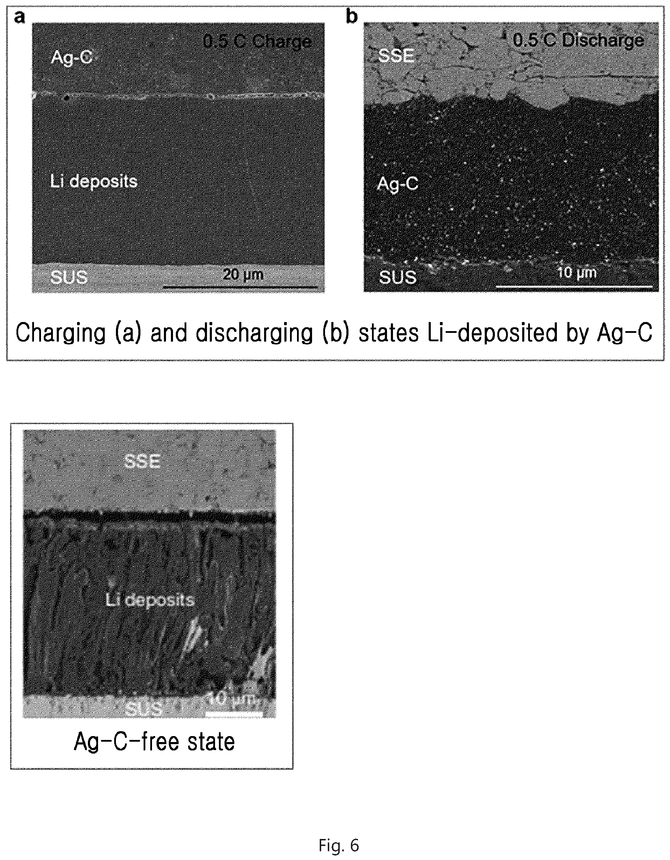

FIG. 6 is a photograph showing cross sections in charging (a) and discharging (b) states of an all-solid-state battery anode including a hybrid graphene composite of the present invention.

A conventional anode has a problem that lithium is ununiform and pores are generated to cause deposition in the form of dendrites, but silver metal microparticles are dissolved in lithium and lower energy required for lithium to be crystallized, thereby allowing lithium to grow uniformly. In addition, graphene prevents lithium metal from growing and coming into direct contact with a solid electrolyte, thereby preventing the solid electrolyte from decomposing and improving durability life.

The graphene serves as a three-dimensional host in which lithium metal is deposited and as a protective layer that protects the solid electrolyte to improve the durability.

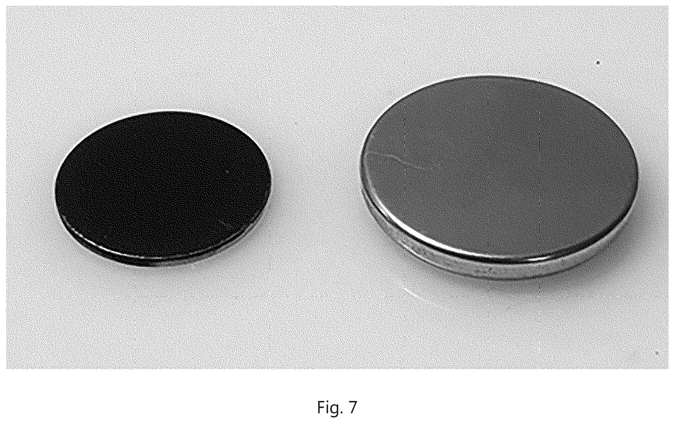

FIG. 7 is a photograph for a hybrid graphene anode (left) manufactured according to the present invention and a coin cell battery (right) manufactured using the same.

As described above, the present invention is not limited to the aforementioned exemplary embodiments and the accompanying drawings, and it will be obvious to those skilled in the technical field to which the present invention pertains that various substitutions, modifications, and changes may be made within the scope without departing from the technical spirit of the present invention.

## Claims

1. A lithium ion battery anode containing hybrid graphene comprising an anode active material composed of a graphene composite having a structure in which a plurality of microparticles and multilayer graphene are mixed,
wherein the microparticles are metal or semiconductor particles, and bound to a surface or inside of the multilayer graphene, some of the microparticles are mutually bound and solidified,
the multilayer graphene has a three-dimensional structure in which several layers of graphene are laminated and bent in an arbitrary direction,
the microparticles are bound to the surface or inside of the graphene, and
a part of an empty space among the microparticles is filled with the graphene composite to have a mutual connection structure.

2. The lithium ion battery anode of claim 1, wherein the graphene is coated on a surface of the microparticles.

3. The lithium ion battery anode of claim 1, wherein a surface of the microparticles is molten and solidified with the graphene and the microparticles and the graphene form a three-dimensional nanostructure and bound.

4. The lithium ion battery anode of claim 1, wherein the graphene composite is produced by a photochemical, photothermal irradiation or thermal treatment process.

5. The lithium ion battery anode of claim 1, wherein the microparticles are composed of a metal or semiconductor selected from the group consisting of silver (Ag), silicon (Si), silicon carbide (SiCx including Si₂C, SiC or SiC₂), silicon oxide (SiOx including SiO or SiO₂), silicon composite oxide (Si-MgₓSiOₓ), magnesium metasilicate (enstatite, MgSiO₃), forsterite (Mg₂SiO₄), gold (Au), platinum (Pt), palladium (Pd), aluminum (Al), zinc (Zn), silver alloy (Ag alloy), copper (Cu) having a surface coated with silver (Ag), and silver (Ag) having a surface coated with copper (Cu).

6. The lithium ion battery anode of claim 1, wherein the graphene composite is a three-dimensional porous graphene structure, and
has a network structure formed by mutually connecting the microparticles.

7. A lithium ion battery comprising:
a cathode including a cathode current collector and a cathode active material layer;
a solid electrolyte layer; and
an anode of any one of claims 1 to 6.

8. The lithium ion battery of claim 7, wherein the cathode active material layer includes at least one cathode active material selected from the group consisting of lithium-nickel-cobalt-manganese composite oxide (NCM), lithium-nickel-cobalt-aluminum composite oxide (NCA), lithium-cobalt composite oxide (LCO), and lithium-nickel composite oxide (LNO).

9. The lithium ion battery of claim 7, wherein the solid electrolyte layer includes at least one solid electrolyte selected from the group consisting of Li2S-P2S5-LiI, Li2S-P2S5-LiCl, Li2S-P2S5-LiBr, Li2S-P2S5-Li2O, Li2S-P2S5-Li2O-LiI, Li2S-SiS2, Li2S-SiS2-LiI, Li2S-SiS2-LiBr, Li2S-SiS2-LiCl, Li2S-SiS2-B2S3-LiI, Li2S-SiS2-P2S5-LiI, Li2S-B2S3, Li2S-GeS2 and Li2S-SiS2-Li3PO4.
